# FASCICULE DE BREVET EUROPEEN

(11) **EP 1 346 923 B1**
(45) Date de publication et mention de la délivrance du brevet: **09.02.2005**
(21) Numéro de dépôt: 02076009.6
(22) Date de dépôt: 13.03.2002
(51) Int. Cl.: B65D 77/04

(54) **Ensemble permettant d'assurer l'intégrité de son chargement et procédé associé**
Einheit, die die Vollständigkeit seiner Ladung versichern kann und entsprechendes Verfahren
Unit able to insure the integrity of its load and associated method

(43) Date de publication de la demande: 24.09.2003
(73) Titulaire: EM Microelectronic-Marin SA, 2074 Marin (CH)
(72) Inventeur: Gyger, Thomas, 2316 Les Ponts-de-Martel (CH); Desjeux, Olivier, 2525 Le Landeron (CH)
(74) Mandataire: Ravenel, Thierry Gérard Louis

(56) Documents cités:
- DE-A- 4 439 914
- FR-A- 2 717 593

## Description

La présente invention concerne notamment un ensemble comprenant un contenant muni d'un transpondeur et rempli par une pluralité d'unités de marchandise. Elle concerne également un ensemble comprenant un support amovible muni d'un transpondeur et chargé d'une pluralité d'unités de marchandise.

On entend par contenant, par exemple un carton d'emballage ou un conteneur, et par support amovible, par exemple une palette de transport ou un véhicule de transport. Les unités de marchandise désignent les divers produits qui peuvent être contenus ou chargés, respectivement dans un contenant ou sur un support.

De tels ensembles comprenant un contenant ou un support amovible et une pluralité d'unités de marchandise sont bien connus dans l'art antérieur. Le document FR 2 717 593 décrit notamment un carton d'emballage susceptible de contenir toutes sortes de produits. Le carton est muni d'une étiquette autocollante dans laquelle est incorporé un transpondeur contenant notamment des informations correspondant aux produits contenus dans le carton.

Le document DE 44 39 914 A1 décrit, selon une variante, une palette de transport équipée d'un transpondeur contenant comme information le type de chargement qu'elle supporte. Un chariot de manutention, susceptible de transporter de telles palettes, est équipé d'une antenne permettant de lire l'information contenue dans le transpondeur de la palette et ainsi de vérifier la conformité du chargement.

De telles solutions sont mises en oeuvre dans la plupart des circuits de distribution afin de permettre un transport plus efficace et un meilleur repérage des différents produits. Ces solutions présentent néanmoins quelques inconvénients. En effet, il est tout à fait envisageable que le contenu d'un carton ou le chargement d'une palette, soit modifié de manière frauduleuse ou simplement à la suite d'une négligence ou d'une erreur. Cette modification du contenu ou du chargement se traduit par la suppression, le remplacement, ou éventuellement l'ajout de marchandises.

Le problème se pose notamment dans des secteurs d'activités où les marchandises sont soumises à des réglementations strictes, comme par exemple dans l'industrie du tabac ou l'industrie pharmaceutique, ou encore dans les secteurs du luxe où les marchandises sont plus fortement exposées à la contrefaçon et au vol. Il est à noter que ce problème d'une manière plus générale se pose dans tous les circuits de distribution.

Selon la présente invention, il est prévu de pouvoir s'assurer de l'intégrité des ensembles tel que définis dans le paragraphe introductif, à n'importe quel stade du circuit de distribution de manière simple et fiable. Un des buts de l'invention est d'empêcher la commercialisation de tous produits frauduleux ou contrefaits susceptibles d'être introduits dans le circuit.

A cet effet, dans un ensemble comprenant un contenant ou un support amovible muni d'un transpondeur et respectivement rempli ou chargé d'une pluralité d'unités de marchandises, chaque unité de marchandise est munie d'un transpondeur comprenant dans une mémoire, par exemple de type non volatile, un numéro d'identification, le transpondeur du contenant ou du support comprenant une valeur de contrôle déterminée en fonction du numéro d'identification de chaque transpondeur des unités de marchandise.

L'invention se rapporte également à la mise en oeuvre des procédés de vérification de l'intégrité de tels ensembles, ainsi qu'au système permettant la mise en oeuvre de ce procédé. D'autres aspects et avantages apparaîtront à la lumière de la description.

L'invention va maintenant être expliquée ci-dessous en détail par un mode d'exécution donné uniquement à titre d'exemple, cette exécution étant illustrée par les dessins annexés parmi lesquels :
La figure 1 représente un ensemble comprenant un contenant, selon un premier mode de réalisation de l'invention;
La figure 2 représente un exemple d'algorithme pour produire une valeur de contrôle,
La figure 3 représente un ensemble comprenant un support amovible, selon un deuxième mode de réalisation de l'invention;
Les figures 4A et 4B représentent deux variantes de système de vérification de l'intégrité d'un ensemble selon l'un quelconque des deux modes de réalisation de l'invention;
La figure 5 représente un diagramme de fonctionnement du procédé de vérification de l'intégrité d'un ensemble selon l'un quelconque des deux modes de réalisation de l'invention;

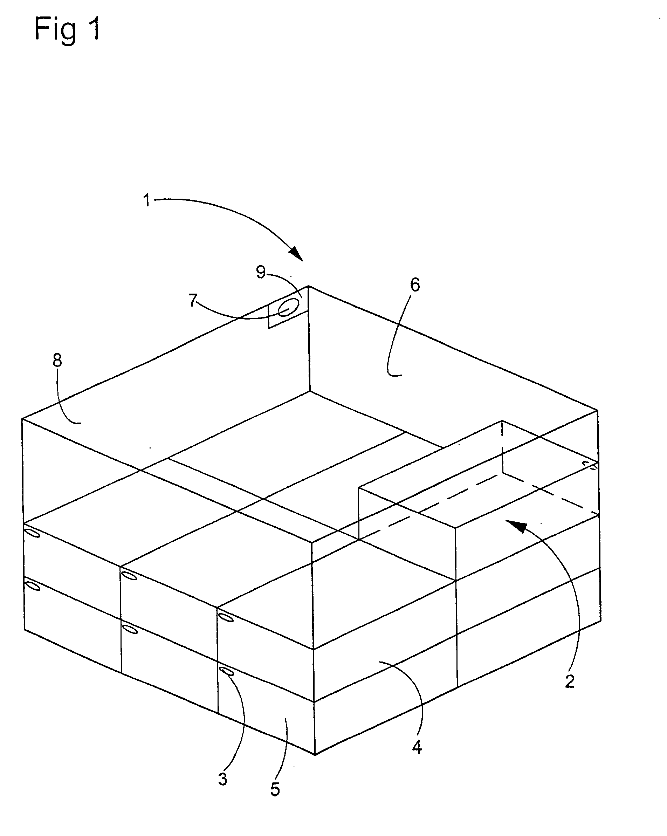

La figure 1 représente un ensemble comprenant un contenant et une pluralité d'unités de marchandise selon un premier mode de réalisation. Le contenant, par exemple un carton 1, est rempli d'une pluralité d'unités 2 de marchandise. Il est à noter que ces unités de marchandise sont de préférence emballées. Une unité 2 de marchandise est alors constituée d'un emballage 4 contenant la ou les marchandises proprement dites.

Chaque unité 2 de marchandise est pourvue d'un transpondeur 3 comprenant au moins comme information un numéro d'identification codé de préférence sur un nombre important de bits, par exemple 16. En effet, il est préférable qu'il existe une grande diversité de numéros d'identification, dans cet exemple 2¹⁶, soit 65536 numéros possibles, afin de réduire au maximum la possibilité d'échange d'unités 2 de marchandise ayant un numéro d'identification identique.

Pour certaines applications, dans un souci de réduction des coûts, il est prévu d'utiliser des transpondeurs 3 passifs de type "Read Only", c'est-à-dire des transpondeurs dont on peut lire les informations qu'ils contiennent sans pouvoir les modifier.

Ces transpondeurs 3 sont placés de préférence à la périphérie des unités 2 de marchandise. Dans l'exemple illustré, les unités 2 de marchandise étant conditionnées dans un emballage 4 cartonné, le transpondeur 3 est préférentiellement placé à l'intérieur contre l'une des faces internes 5 de cet emballage 4. Ainsi, une personne cherchant à manipuler le transpondeur 3 d'une unité 2 devra nécessairement endommager l'emballage 4.

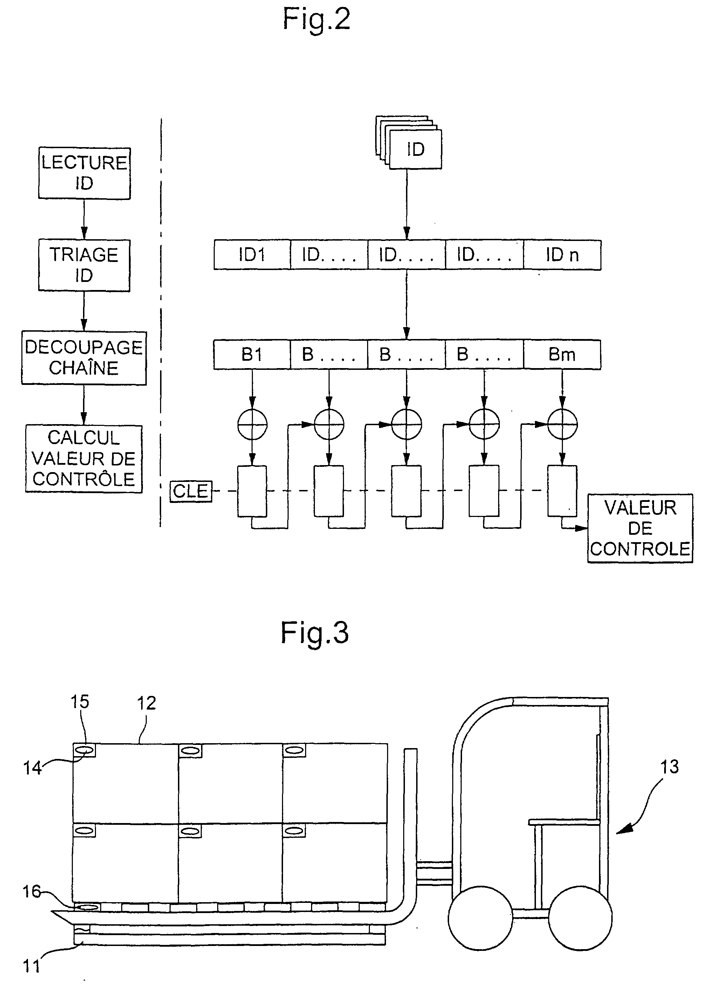

Le carton 1 est également pourvu d'un transpondeur 7 pouvant être disposé par exemple dans un coin supérieur d'une des parois 8 latérales du carton 1 et typiquement associé à une étiquette autocollante 9 apposée sur le carton 1, servant à indiquer le type des marchandises transportées. Un exemple formé par un transpondeur et une étiquette autocollante est notamment décrit dans le document FR 2 717 593 en rapport avec la figure 2 dudit document qui est intégré ici par référence.

Le transpondeur 7 utilisé dans le cadre de ce premier mode de réalisation, est de préférence un transpondeur passif de type "Read / Write", c'est-à-dire un transpondeur "lisible / inscriptible". Ce transpondeur 7 apposé sur le carton 1 contient dans une mémoire une valeur de contrôle qui dépend du numéro d'identification de chacun des transpondeurs 3 dont sont munis toutes les unités 2 de marchandise contenus dans le carton 1. Cette valeur de contrôle est produite de telle manière qu'elle ne puisse pas être produite ou adaptée par une personne non-autorisée. Pour être pleinement efficace, le calcul de cette valeur de contrôle doit être affecté par toutes modifications sur au moins un numéro d'identification des transpondeurs 3 contenus dans le carton 1. On entend notamment par modifications, le remplacement, le retrait ou éventuellement l'ajout d'un numéro d'identification pouvant être consécutif au remplacement, retrait ou ajout d'une unité 2 de marchandise.

Dans cet objectif, la valeur de contrôle peut être calculée de différentes manières suivant par exemple le niveau de sécurité désiré. Si l'on recherche une manière simple pour calculer cette valeur de contrôle, on pourra par exemple effectuer une simple addition des numéros d'identification des transpondeurs lus, ou encore procéder à une opération logique, par exemple du type XOR, entre chaque numéro d'identification. Il est encore possible pour réduire la taille de la valeur de contrôle d'effectuer d'autres opérations sur le résultat obtenu par addition ou opération logique.

Si l'on recherche une manière sécurisée pour calculer la valeur de contrôle, on effectue le calcul de préférence au moyen d'un algorithme de chiffrement par bloc dans une configuration de chaînage standardisée, par exemple par "Cipher Block Chaining" (CBC). L'algorithme de cryptage utilisé peut être l'un des algorithmes symétriques connus, comme par exemple, "Data Encryption Standard" (DES), "Secure And Fast Encryption Routine" (SAFER) ou "Advanced Encryption Standard" (AES). En association avec l'utilisation d'un tel algorithme de cryptage, une clé de chiffrement est utilisée. Cette clé de chiffrement permet de produire la valeur de contrôle. Il est important que cette clé de chiffrement soit uniquement fournie aux personnes autorisées.

Un exemple du fonctionnement d'un tel algorithme pour produire une valeur de contrôle est représenté à la figure 2.

Selon une première étape de ce processus de production d'une valeur de contrôle, tous les numéros d'identification ID sont lus sur les transpondeurs des unités de marchandise.

Dans une deuxième étape, les numéros d'identification ID collectés durant la première étape sont triés dans un ordre défini (lD1, ..., lDn), par exemple croissant, décroissant ou selon leur emplacement dans le contenant, ou encore selon leur ordre de lecture, de manière à former une chaîne de données (lD1, ..., lDn) ou chaîne de chiffrement.

Dans une troisième étape, la chaîne de données (lD1,..., lDn) créée durant la deuxième étape est découpée en blocs (B1, ..., Bm) correspondants à l'algorithme de chiffrement, par exemple 32, 64 ou 128 bits.

Dans une quatrième étape les blocs découpés (B1, ..., Bm) durant la troisième étape sont chiffrés en mode CBC au moyen d'une clé de chiffrement. Une valeur de hachage calculable uniquement avec la clé de chiffrement est obtenue en sortie de l'algorithme de chiffrement. C'est cette valeur de hachage qui est utilisée comme valeur de contrôle dans le transpondeur apposé sur le contenant.

La figure 3 représente un ensemble comprenant un support amovible et une pluralité d'unités de marchandise, selon un deuxième mode de réalisation de l'invention. Le support amovible 11 peut être par exemple une palette de transport 11, ou un véhicule de transport. Les unités 12 de marchandise sont typiquement des contenants, par exemple des cartons 12, qui sont chargés sur la palette 11. La palette une fois chargée, est susceptible d'être déplacée au moyen d'un chariot 13 de manutention permettant le chargement d'une ou plusieurs palettes 11 et des cartons 12 chargés dessus, dans un véhicule de transport.

Selon ce deuxième mode de réalisation, chaque carton 12 est pourvu d'un transpondeur 14 contenant comme information au moins un numéro d'identification. Typiquement, le transpondeur 14 est associé avec une étiquette autocollante 15 permettant de repérer aisément sa position.

La palette 11 de transport est quant à elle pourvue d'un transpondeur 16 contenant une valeur de contrôle dépendant du numéro d'identification de chacun des transpondeurs 14 dont sont munis les cartons 12 chargés sur la palette 11. Cette valeur de contrôle peut être définie de la même manière que dans le premier mode de réalisation exposé ci-dessus.

On obtient ainsi, un ensemble comprenant un support amovible muni d'un transpondeur et une pluralité d'unités de marchandise, par exemple de contenants disposés sur le support. Chaque contenant est muni d'un transpondeur comprenant un numéro d'identification, le transpondeur du support amovible comprenant une valeur de contrôle déterminée en fonction des numéros d'identification de chaque transpondeur des contenants.

Selon une variante avantageuse de ce deuxième mode de réalisation, les cartons 12 utilisés pour le chargement des palettes 11, sont similaires à ceux présentés dans le cadre du premier mode de réalisation. Chaque transpondeur 14 correspondant à un carton 12 contient dans ce cas une valeur de contrôle dite de premier niveau définie comme dans le premier mode. Chaque transpondeur 14 contient également un numéro d'identification propre. Ce numéro d'identification des transpondeurs 14 de ces cartons 12 correspond de préférence à la valeur de contrôle de premier niveau. Le transpondeur 16 de la palette contient une valeur de contrôle dite de deuxième niveau définie au moyen d'une clé de chiffrement à partir des numéros d'identification des transpondeurs 14, ces numéros correspondant de manière avantageuse aux valeurs de contrôle de premier niveau. Les clés de chiffrement utilisées pour calculer les valeurs de contrôle de premier et de deuxième niveau peuvent être les mêmes.

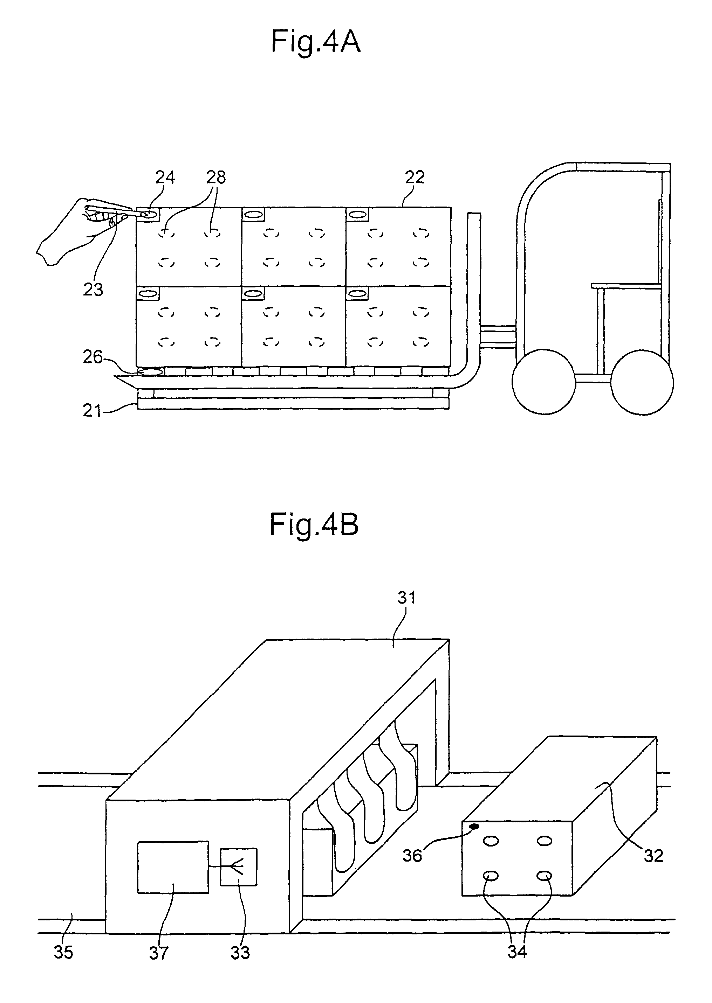

Les figures 4A et 4B représentent deux variantes de système de vérification de l'intégrité d'un ensemble selon l'un quelconque des deux modes de réalisation de l'invention.

Selon une première variante représentée à la figure 4A, la vérification de l'intégrité, par exemple d'un support amovible 21 chargé d'une pluralité d'unités 22 de marchandise, par exemple des cartons, peut se faire en tout point du circuit de distribution par les personnes autorisées, c'est-à-dire les personnes possédant la clé de chiffrement de l'algorithme de calcul de la valeur de contrôle. Lors de la réception, il est intéressant de pouvoir s'assurer de l'intégrité du chargement avant même d'ouvrir les cartons 22. C'est pourquoi, la personne autorisée recevant un chargement dispose, selon cette première variante, de moyens de vérification portables directifs 23 pouvant se présenter sous la forme d'un petit objet cylindrique portable, par exemple en forme de stylo.

Ces moyens de vérification 23 comprennent notamment des moyens de lecture, des moyens de traitement et des moyens de comparaison, non représentés. Les moyens de lecture permettent de lire tous types d'informations contenues dans les transpondeurs 24, 26 et 28, et en particulier, les numéros d'identifications des transpondeurs 24 de chaque carton, ainsi que la valeur de contrôle du transpondeur 26 du support amovible. La lecture de ces informations est effectuée par interrogation directe de chaque transpondeur des cartons 22 ou du support 21 par un passage à proximité des moyens de vérification 23. Les moyens de traitement permettent de calculer une valeur de contrôle à partir des numéros d'identification lus au moyen d'une clé de chiffrement. Enfin, les moyens de comparaison permettent de comparer la valeur de contrôle lue sur le transpondeur 21 du support amovible et la valeur de contrôle calculée.

Il est important de noter qu'il est possible d'effectuer les mêmes vérifications entre les transpondeurs 28 de chaque unité de marchandise contenues dans un carton 22 et le transpondeur 24 du carton correspondant.

Selon une deuxième variante représentée à la figure 4B, les personnes autorisées disposent de moyens de vérification fixes isotropes 31, 33, et 37, pour vérifier l'intégrité d'un contenant 32 rempli par une pluralité d'unité de marchandise, non représentées. Ces moyens de vérification peuvent être constitués par exemple d'un sas 31 comprenant des moyens de lecture 33, des moyens de traitement et des moyens de comparaison, schématiquement représentés par le rectangle 37, ces moyens présentant les mêmes fonctionnalités que ceux utilisés dans la première variante. Le sas 31 peut être avantageusement disposé sur un tapis roulant 35. Selon cette deuxième variante, les moyens de lecture 33 sont typiquement une antenne de lecture utilisant un protocole d'anti-collision pour lire tous les transpondeurs 34 des unités de marchandise contenus dans le contenant 32.

Quels que soient les moyens de vérification utilisés (23 ou 31, 33 et 37), si les deux valeurs de contrôle lue et calculée sont identiques, le chargement n'a pas été modifié. En revanche, si les deux valeurs sont différentes, cela signifie que le chargement a été modifié, par suppression, remplacement ou éventuellement ajout de marchandise.

Il est important de remarquer que les première et deuxième variantes ont été respectivement représentées en rapport avec les deuxième et premier modes de réalisation de l'invention, mais qu'il est tout à fait envisageable d'adapter ces première et deuxième variantes respectivement en rapport avec les premier et deuxième modes de réalisation selon l'invention.

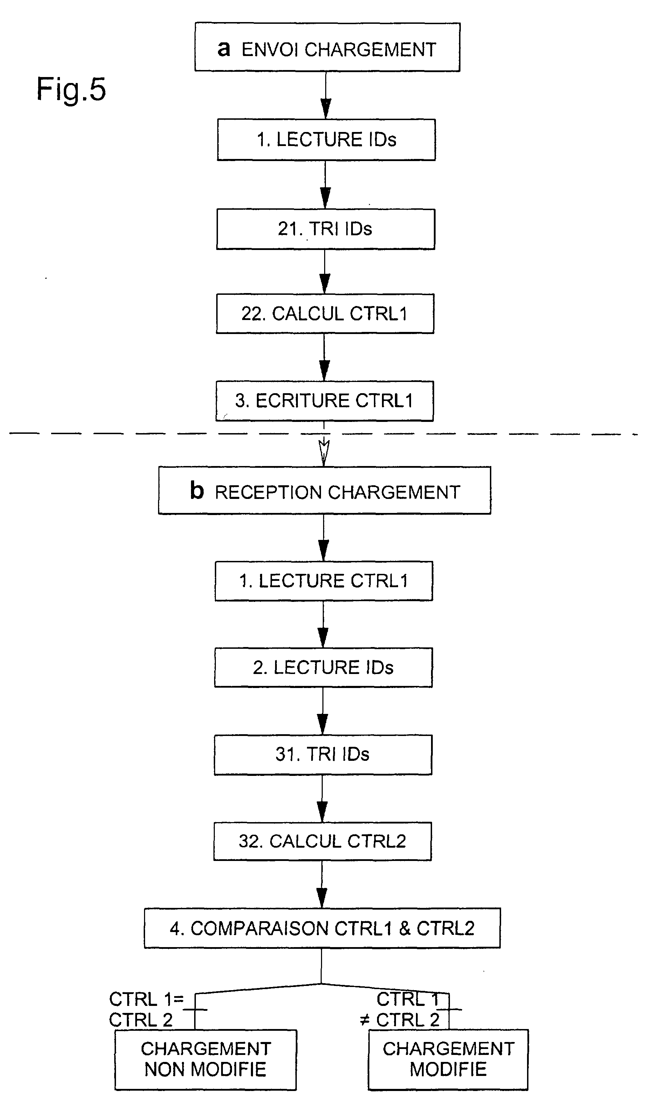

Le diagramme du procédé représenté à la figure 5, concerne un ensemble comprenant un contenant ou un support amovible respectivement rempli ou chargé d'une pluralité d'unités de marchandise.

Les transpondeurs des unités de marchandise contiennent au moins un numéro d'identification ID comme information. Le contenant ou le support est équipé d'un transpondeur lisible / réinscriptible. Le procédé se décompose en deux parties principales concernant les étapes avant l'envoi d'un chargement et les étapes lors d'un contrôle de ce chargement à n'importe quel stade du circuit de distribution.

Avant l'envoi d'un chargement, le procédé comprend notamment les étapes suivantes :
a1. lire les numéros d'identification (lDs) sur les transpondeurs des unités de marchandise;
a2. calculer une première valeur de contrôle (CTRL1 ) à partir des numéros d'identification (lDs) lus à l'étape précédente;
a3. écrire la première valeur de contrôle (CTRL1 ) calculée à l'étape précédente sur le transpondeur du contenant ou du support amovible;

Dans le cas, où l'on recherche à calculer une valeur de contrôle d'une manière sécurisée, l'étape a2 du procédé est remplacée par les deux étapes a21 et a22 suivantes :
a21. trier les numéros d'identification lus à l'étape précédente selon un ordre prédéfini reproductible de manière à former une chaîne de chiffrement ;
a22. calculer une première valeur de contrôle au moyen d'une clé de chiffrement (CLE) à partir de la chaîne de chiffrement obtenue à l'étape précédente ;

Lors d'un contrôle du chargement dans le circuit de distribution, le procédé comprend notamment les étapes suivantes:
b1. lire la première valeur de contrôle (CTRL1 ) sur le transpondeur du contenant ou du support amovible ;
b2. lire les numéros d'identification (lDs) sur les transpondeurs des unités de marchandise;
b3. calculer une deuxième valeur de contrôle (CTRL2) à partir des numéros d'identification lus à l'étape précédente ; ces étapes étant suivies par,
b4. comparer les première et deuxième valeurs de contrôle (CTRL1 et CTRL2) ;

Si les deux valeurs de contrôles sont différentes, le chargement de l'ensemble formé par le contenant ou le support et la pluralité d'unités de marchandise, a été modifié. En revanche, si les deux valeurs de contrôle sont identiques, le chargement n'a pas été modifié.

Il est à noter que l'étape b1 peut être effectuée également de manière équivalente entre les étapes b2 et b3 ou entre les étapes b3 et b4. Dans le cas, où la valeur de contrôle a été calculée de manière sécurisée, l'étape b3 du procédé est remplacée par les deux étapes b31 et b32 suivantes :
b31. trier les numéros d'identification lus à l'étape précédente selon le même ordre prédéfini utilisé lors de l'envoi, de manière à reformer la chaîne de chiffrement ;
b32. calculer une deuxième valeur de contrôle (CTRL2) au moyen de la clé de chiffrement (CLE), à partir de la chaîne de chiffrement obtenue à l'étape précédente ;

Il est également à noter que les étapes du procédé concernant la réception peuvent être réalisées plusieurs fois, notamment dans le cas de plusieurs contrôles intermédiaires, comme par exemple lors de formalités de douanes, ou dans des centres de stockage avant redistribution.

On notera également, que les étapes de calcul des valeurs de contrôle peuvent être également décomposées en trois sous-étapes correspondant aux deuxième, troisième et quatrième étapes de la figure 2, décrites lors de la présentation d'un exemple détaillé du calcul des valeurs de contrôle.

Dans le cadre de la variante du deuxième mode de réalisation, présentant une combinaison des deux ensembles, c'est-à-dire un support amovible chargé d'une pluralité de contenants eux-mêmes remplis d'une pluralité d'unité de marchandise, la vérification de l'intégrité du chargement est effectué sur deux niveaux. Le procédé de vérification de l'intégrité d'un tel ensemble à deux niveaux constitue un répétition du procédé présenté à la figure 5 pour chaque sous-ensemble formé par chaque contenant et son contenu, ainsi qu'une application de ce même procédé de base à l'ensemble formé par le support amovible et la pluralité de sous-ensembles.

Lors d'un contrôle de l'intégrité du chargement formé par cet ensemble à deux niveaux, on procède astucieusement en premier à la vérification de la valeur de contrôle de deuxième niveau correspondant à celle de l'ensemble, puis seulement si il y a identité des valeurs de contrôle de deuxième lue et calculée, on peut alors procéder à la vérification des valeurs de contrôle de premier niveau de chaque sous-ensemble.

Il est également possible de réaliser une vérification de l'intégrité d'un circuit de distribution au travers un ensemble à plus de deux niveaux, où tout ensemble est muni d'un transpondeur comprenant une valeur de contrôle dépendant de chaque sous-ensemble qu'il comprend, cet ensemble pouvant être également un sous-ensemble d'un ensemble plus vaste.

A titre de variante selon l'un des modes de réalisation sus-présentés, notamment dans le cas d'objet de luxe comprenant déjà des transpondeurs pour assurer leur traçabilité, il est prévu d'utiliser ces transpondeurs existants comme transpondeurs des unités de marchandise.

Egalement à titre de variante, selon l'un des modes de réalisation susprésentes, il est possible de prévoir qu'au moins un des transpondeurs d'une des unités de marchandise soit un transpondeur du type "Read Write" (lisible / réinscriptible). Dans ce cas la valeur de contrôle pour assurer l'intégrité du chargement peut être stockée dans la mémoire de ce au moins un transpondeur "Read Write".

A titre de variante supplémentaire, il est possible d'adapter un ensemble selon l'un des modes de réalisation de telle manière à assurer également une fonction de traçabilité de ce dispositif.

Avantageusement, le choix des transpondeurs utilisés est adaptable en fonction de la valeur des unités de marchandise. Dans le cas, de produits de luxe, des transpondeurs actifs, relativement onéreux, peuvent être utilisés car ils représentent un surcoût négligeable. En revanche, dans le cas de produits bon marché, des transpondeurs passifs en lecture seule sont utilisés pour les unités de marchandise et des transpondeurs passifs en lecture-écriture sont utilisés pour les dispositif de stockage, ce qui permet de ne pas engendrer de surcoût prohibitif.

Il est bien entendu que la description n'est donnée qu'à titre d'exemple et que d'autres modes de réalisation, en particulier des ensembles qui peuvent être formés par un véhicule et son chargement, par un entrepôt et son stock, à la condition qu'ils satisfassent aux conditions de la revendication 1, ainsi que des procédés de vérification associés, font également l'objet de la présente invention.

## Revendications

1. Ensemble comprenant un contenant (1) muni d'un transpondeur (7) et une pluralité d'unités (2) de marchandise remplissant le contenant, chaque unité de marchandise étant munie d'un transpondeur (3) comprenant un numéro d'identification, le transpondeur du contenant comprenant dans une mémoire une valeur de contrôle déterminée en fonction du numéro d'identification de chaque transpondeur desdites unités de marchandise.

2. Ensemble selon la revendication 1, **caractérisé en ce que** les unités de marchandise sont positionnées de manière à ce que leur transpondeur soit à la périphérie du contenant.

3. Ensemble selon la revendication 1 ou 2, **caractérisé en ce que** le transpondeur du contenant est en lecture / écriture et **en ce que** les transpondeurs des unités de marchandise sont en lecture seule.

4. Ensemble comprenant un support amovible (11 ) muni d'un transpondeur (16) et une pluralité d'unités (12) de marchandise disposées sur ce support, chaque unité de marchandise étant munie d'un transpondeur (14) comprenant un numéro d'identification, le transpondeur du support comprenant dans une mémoire une valeur de contrôle déterminée en fonction du numéro d'identification de chaque transpondeur desdites unités de marchandise.

5. Ensemble comprenant un support amovible selon la revendication 4, **caractérisé en ce que** chaque unité de marchandise forme un contenant rempli par des sous-unités de marchandise.

6. Ensemble à au moins deux niveaux incluant
- un support (21) amovible comprenant une pluralité de contenants (22), chaque contenant étant muni d'un transpondeur (24) comprenant un numéro d'identification, le support amovible étant muni d'un transpondeur (26) comprenant une valeur de contrôle de premier niveau déterminée en fonction des numéros d'identification de chaque transpondeur desdits contenants,
- chaque contenant étant rempli par une pluralité d'unité de marchandise, chaque unité de marchandise étant munie d'un transpondeur (28) comprenant un numéro d'identification, le transpondeur de chaque contenant comprenant une valeur de contrôle de deuxième niveau déterminée en fonction des numéros d'identification de chaque transpondeur desdites unités de marchandise qu'il contient.

7. Ensemble selon la revendication 6, **caractérisé en ce que** le numéro d'identification de chaque transpondeur des contenants correspond à la valeur de contrôle de premier niveau contenue dans ce transpondeur.

8. Procédé de vérification de l'intégrité d'un ensemble selon la revendication 1, respectivement selon la revendication 4, **caractérisé en ce qu'**il comprend les étapes suivantes :
avant un envoi de marchandise :
a1. lire les numéros d'identification (lDs) sur les transpondeurs des unités de marchandise ;
a2. calculer une première valeur de contrôle (CTRL1 ) à partir des numéros d'identification (lDs) lus à l'étape précédente;
a3. écrire la première valeur de contrôle (CTRL1) calculée à l'étape précédente sur le transpondeur du contenant, respectivement du support amovible ;
lors d'un contrôle de marchandise:
b1. lire la première valeur de contrôle (CTRL1 ) sur le transpondeur du contenant, respectivement du support amovible;
b2. lire les numéros d'identification (lDs) sur les transpondeurs des unités de marchandise ;
b3. calculer une deuxième valeur de contrôle (CTRL2) à partir des numéros d'identification lus à l'étape précédente; ces étapes étant suivies par,
b4. comparer les première et deuxième valeurs de contrôle (CTRL1 et CTRL2) ;

9. Procédé de vérification selon la revendication 8, **caractérisé en ce que** avant un envoi de marchandise, l'étape a2 est remplacée par les deux étapes suivantes :
a21. trier les numéros d'identification lus à l'étape précédente selon un ordre prédéfini reproductible de manière à former une chaîne de chiffrement;
a22. calculer une première valeur de contrôle (CTRL1) au moyen d'une clé de chiffrement (CLE) à partir de la chaîne de chiffrement obtenue à l'étape précédente ;
et **en ce que** lors d'un contrôle de marchandise, l'étape b3 est remplacée par les deux étapes suivantes:
b31. trier les numéros d'identification lus à l'étape précédente selon le même ordre prédéfini utilisé lors de l'envoi, de manière à reformer la chaîne de chiffrement ;
b32. calculer une deuxième valeur de contrôle (CTRL2) au moyen de la clé de chiffrement (CLE), à partir de la chaîne de chiffrement obtenue à l'étape précédente ;

10. Système de vérification de l'intégrité d'un ensemble selon l'une des revendications 1 à 7, comprenant des moyens de vérification (23, 31) externes à l'ensemble, incluant des moyens de lecture des informations contenus dans les transpondeurs, des moyens de calcul de valeurs de contrôle au moyen d'une clé de chiffrement, et des moyens de comparaison de valeurs de contrôle.

11. Système de vérification selon la revendication 10, **caractérisé en ce que** les moyens de vérification (23) sont portables et directifs.

12. Système de vérification selon la revendication 10, **caractérisé en ce que** les moyens de vérification (31) sont fixes et isotropes.

13. Ensemble comprenant un contenant et une pluralité d'unités de marchandise remplissant le contenant, chaque unité de marchandise étant munie d'un transpondeur comprenant un numéro d'identification, **caractérisé en ce qu'**au moins un des transpondeurs d'une des unités de marchandise est un transpondeur lisible / réinscriptible comprenant dans une mémoire une valeur de contrôle déterminée en fonction du numéro d'identification de chaque transpondeur desdites unités de marchandise.

14. Ensemble comprenant un support amovible et une pluralité d'unités de marchandise disposées sur ce support, chaque unité de marchandise étant munie d'un transpondeur comprenant un numéro d'identification, **caractérisé en ce qu'**au moins un des transpondeurs d'une des unités de marchandise est un transpondeur lisible / réinscriptible comprenant dans une mémoire une valeur de contrôle déterminée en fonction du numéro d'identification de chaque transpondeur desdites unités de marchandise.

## Patentansprüche

1. Baueinheit, die einen Behälter (1), der mit einem Transponder (7) versehen ist, und mehrere Wareneinheiten (2), mit denen der Behälter gefüllt ist, umfasst, wobei jede Wareneinheit mit einem Transponder (3) versehen ist, der eine Kennung enthält, wobei der Transponder des Behälters in einem Speicher einen bestimmten Kontrollwert enthält, der von der Kennung jedes Transponders der Wareneinheiten abhängt.

2. Baueinheit nach Anspruch 1, **dadurch gekennzeichnet, dass** die Wareneinheiten in der Weise positioniert sind, dass sich ihr Transponder am Umfang des Behälters befindet.

3. Baueinheit nach Anspruch 1 oder 2, **dadurch gekennzeichnet, dass** der Transponder des Behälters liest/schreibt und dass die Transponder der Wareneinheiten nur lesen.

4. Baueinheit, die einen entnehmbaren Träger (11), der mit einem Transponder (16) versehen ist, und mehrere Wareneinheiten (12), die auf diesem Träger angeordnet sind, umfasst, wobei jede Wareneinheit mit einem Transponder (14) versehen ist, der eine Kennung enthält, wobei der Transponder des Trägers in einem Speicher einen bestimmten Kontrollwert enthält, der von der Kennung jedes Transponders der Wareneinheiten abhängt.

5. Baueinheit, die einen entnehmbaren Träger umfasst, nach Anspruch 4, **dadurch gekennzeichnet, dass** jede Wareneinheit einen mit Waren-Untereinheiten gefüllten Behälter bildet.

6. Baueinheit mit wenigstens zwei Ebenen, die umfasst:
- einen entnehmbaren Träger (21), der mehrere Behälter (22) enthält, wobei jeder Behälter mit einem Transponder (24) versehen ist, der eine Kennung enthält, wobei der entnehmbare Träger mit einem Transponder (26) versehen ist, der einen bestimmten Kontrollwert der ersten Ebene enthält, der von den Kennungen jedes Transponders der Behälter abhängt,
- wobei jeder Behälter mit mehreren Wareneinheiten gefüllt ist, wobei jede Wareneinheit mit einem Transponder (28) versehen ist, der eine Kennung enthält, wobei der Transponder jedes Behälters einen bestimmten Kontrollwert der zweiten Ebene enthält, der von den Kennungen jedes Transponders der Wareneinheiten, die er enthält, abhängt.

7. Baueinheit nach Anspruch 6, **dadurch gekennzeichnet, dass** die Kennung jedes Transponders der Behälter dem Kontrollwert der ersten Ebene, der in diesem Transponder enthalten ist, entspricht.

8. Verfahren zum Verifizieren der Integrität einer Baueinheit nach Anspruch 1 bzw. nach Anspruch 4, **dadurch gekennzeichnet, dass** es die folgenden Schritte umfasst:
vor dem Verschicken der Waren:
a1. Lesen der Kennungen (IDs) an den Transpondem der Wareneinheiten;
a2. Berechnen eines ersten Kontrollwerts (CTRL1) anhand der im vorhergehenden Schritt gelesenen Kennungen (IDs);
a3. Schreiben des im vorhergehenden Schritt berechneten ersten Kontrollwerts (CTRL1) in den Transponder des Behälters bzw. des entnehmbaren Trägers; und
bei einer Warenkontrolle:
b1. Lesen des ersten Kontrollwertes (CTRL1) in dem Transponder des Behälters bzw. in dem entnehmbaren Träger;
b2. Lesen der Kennungen (ID2) in den Transpondern der Wareneinheiten;
b3. Berechnen eines zweiten Kontrollwertes (CTRL2) anhand der im vorhergehenden Schritt gelesenen Kennungen; wobei diesen Schritten folgt:
b4. Vergleichen des ersten und des zweiten Kontrollwertes (CTRL1 und CTRL2).

9. Verifizierungsverfahren nach Anspruch 8, **dadurch gekennzeichnet, dass** vor dem Verschicken der Güter der Schritt a2 durch die zwei folgenden Schritte ersetzt ist:
a21. Sortieren der im vorhergehenden Schritt gelesenen Kennungen gemäß einer im Voraus definierten, reproduzierbaren Reihenfolge, um eine Chiffrierungskette zu erhalten;
a22. Berechnen eines ersten Kontrollwerts (CTRL1) mittels eines Chiffrierungsschlüssels (CLE) anhand der Chiffrierungskette, die im vorhergehenden Schritt erhalten wird;
und dass bei einer Güterkontrolle der Schritt b3 durch die zwei folgenden Schritte ersetzt ist:
b31. Sortieren der im vorhergehenden Schritt gelesenen Kennungen in derselben im Voraus definierten Reihenfolge, die beim Versenden verwendet wurde, um die Chiffrierungskette erneut zu bilden;
b32. Berechnen eines zweiten Kontrollwertes (CTRL2) mittels des Chiffrierungsschlüssels (CLE) anhand der im vorhergehenden Schritt erhaltenen Chiffrierungskette.

10. System zum Verifizieren der Integrität einer Baueinheit nach einem der Ansprüche 1 bis 7, das außerhalb der Baueinheit Verifizierungsmittel (23, 31) umfasst, die Mittel zum Lesen von Informationen, die in den Transpondern enthatten sind, Mittel zum Berechnen von Kontrollwerten mittels eines Chiffrierungsschlüssels und Mittel zum Vergleichen der Kontrollwerte enthalten.

11. Verifizierungssystem nach Anspruch 10, **dadurch gekennzeichnet, dass** die Verifizierungsmittel (23) tragbar und richtungsabhängig sind.

12. Verifizierungssystem nach Anspruch 10, **dadurch gekennzeichnet, dass** die Verifizierungsmittel (31) fest und isotrop sind.

13. Baueinheit, die einen Behälter und mehrere Wareneinheiten, mit denen Behälter gefüllt ist, umfasst, wobei jede Wareneinheit mit einem Transponder versehen ist, der eine Kennung enthält, **dadurch gekennzeichnet, dass** wenigstens einer der Transponder einer der Wareneinheiten ein lesbarer/wiederbeschreibbarer Transponder ist, der in einem Speicher einen bestimmten Kontrollwert enthält, der von der Kennung jedes Transponders der Wareneinheiten abhängt.

14. Baueinheit, die einen entnehmbaren Träger und mehrere auf diesem Träger angeordnete Wareneinheiten enthält, wobei jede Wareneinheit mit einem Transponder versehen ist, der eine Kennung enthält, **dadurch gekennzeichnet, dass** wenigstens einer der Transponder einer der Wareneinheiten ein lesbarer/wiederbeschreibbarer Transponder ist, der in einem Speicher einen bestimmten Kontrollwert enthält, der von der Kennung jedes Transponders der Wareneinheiten abhängt.

## Claims

1. Assembly including a container (1) provided with a transponder (7) and a plurality of units (2) of goods filling the container, each unit of goods being provided with a transponder (3) including an identification number, the container transponder including, in a memory, a check value determined as a function of the identification number of each transponder of said units of goods.

2. Assembly according to claim 1, **characterised in that** the units of goods are positioned such that their transponder is at the periphery of the container.

3. Assembly according to claim 1 or 2, **characterised in that** the container transponder is a read / write transponder and **in that** the goods unit transponders are read only transponders.

4. Assembly comprising a removable support (11) provided with a transponder (16) and a plurality of units (12) of goods arranged on said support, each unit of goods being provided with a transponder (14) including an identification number, the support transponder including, in a memory, a check value determined as a function of the identification number of each transponder of said units of goods.

5. Assembly including a removable support according to claim 4, **characterised in that** each unit of goods forms a container filled with sub-units of goods.

6. Assembly with at least two levels including:
- a removable support (21) comprising a plurality of containers (22), each container being provided with a transponder (24) including an identification number, the removable support being provided with a transponder (26) including a first level check value determined as a function of the identification numbers of each transponder of said containers,
- each container being filled with a plurality of units of goods, each unit of goods being provided with a transponder (28) including an identification number, the transponder of each container including a second level check value determined as a function of the identification numbers of each transponder of said units of goods that it contains.

7. Assembly according to claim 6, **characterised in that** the identification number of each container transponder corresponds to the first level check value contained in this transponder.

8. Method for checking the integrity of an assembly according to claim 1, respectively according to claim 4, **characterised in that** it includes the following steps:
prior to sending goods :
a1. reading the identification numbers (IDs) of the goods unit transponders;
a2. calculating a first check value (CTRL1) from the identification numbers (IDs) read at the preceding step;
a3. writing the first check value (CTRL1) calculated at the preceding step respectively in the container or removable support transponder;
during a goods check:
b1. reading the first check value (CTRL1 ) respectively in the container or removable support transponder;
b2. reading the identification numbers (IDs) of the goods unit transponders;
b3. calculating a second check value (CTRL2) from the identification numbers read at the preceding step; these steps being followed by,
b4. comparing the first and second check values (CTRL1 and CTRL2).

9. Checking method according to claim 8, **characterised in that** prior to sending goods, step a2 is replaced by the following two steps:
a21. sorting the identification numbers read at the preceding step into a reproducible predefined order so as to form a cipher chain;
a22. calculating a first check value (CTRL1) by means of a cipher key (KEY) from the cipher chain obtained at the preceding step;
and **in that** during a goods check, step b3 is replaced by the following two steps:
b31. sorting the identification numbers read at the preceding step in the same predefined order used when the goods was sent, so as to reform the cipher chain;
b32. calculating a second check value (CTRL2) by means of the cipher key (KEY), from the cipher chain obtained at the preceding step.

10. System for checking the integrity of an assembly according to any of claims 1 to 7, comprising checking means (23, 31) that are external to the assembly, including read means for the data contained in the transponders, means for calculating the check values by means of a cipher key, and means for comparing the check values.

11. Checking system according to claim 10, **characterised in that** the checking means (23) are portable and directive.

12. Checking system according to claim 10, **characterised in that** the checking means (31) are fixed and isotropic.

13. Assembly including a container and a plurality of units of goods filling the container, each unit of goods being provided with a transponder including an identification number, **characterised in that** at least one of the transponders of one of the units of goods is a read / write transponder including, in a memory, a check value determined as a function of each transponder of said units of goods.

14. Assembly including a removable support and a plurality of units of goods arranged on said support, each unit of goods being provided with a transponder including an identification number, **characterised in that** at least one of the transponders of one of the units of goods is a read/write transponder including, in a memory, a check value determined as a function of the identification number of each transponder of said units of goods.
